# EUROPEAN PATENT APPLICATION

(11) **EP 4 831 963 A1**
(43) Date of publication of application: **28.10.2026**
(21) Application number: 26173838.9
(22) Date of filing: 21.04.2026
(51) Int. Cl.: G08G 1/16, B60K 35/22, B60K 35/23, B60K 35/29, G08G 1/0962, B60W 50/14

(54) **DISPLAY CONTROL DEVICE**

(30) Priority: 24.04.2025 JP 2025072664
(71) Applicant: Toyota Jidosha Kabushiki Kaisha, Toyota-shi, Aichi-ken 471-8571 (JP)
(72) Inventor: HATTORI, Tsutomu, TOYOTA-SHI, AICHI-KEN, 471-8571 (JP); KONISHI, Shogo, TOYOTA-SHI, AICHI-KEN, 471-8571 (JP); NISHIDA, Takashi, TOYOTA-SHI, AICHI-KEN, 471-8571 (JP); TAKADA, Arata, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-CITY, AICHI-PREF, 448-8661 (JP)
(74) Representative: Cabinet Beau de Loménie

(57) **Abstract**

A meter ECU (20) includes an acquisition unit (21A) configured to acquire a surrounding situation of a vehicle (10), and a control unit (21B) configured to display, when an image (60) indicating a surrounding situation of the vehicle (10) is displayed on a monitor (44) provided near a driver's seat of the vehicle (10) and only one of rear-end points (P2) on opposite sides of an object (10A) located around the vehicle is recognized, an image indicating the object (62) based on an offset amount of the image indicating the object in a lane-width direction, the offset amount being determined depending on a category of the object (10A).

## Description

### 1. Field of the Invention

The present disclosure relates to a display control device.

### 2. Description of Related Art

Japanese Unexamined Patent Application Publication No. 2022-066952 (JP 2022-066952 A) discloses a technology in which, when another vehicle is present in a distant region ahead of a vehicle in a traveling direction outside a display range on a screen, a mark indicating that the other vehicle is present in the distant region ahead of the vehicle in the traveling direction outside the display range on the screen is displayed at a fixed position of a traveling lane displayed on the screen.

### SUMMARY OF THE INVENTION

With the technology disclosed in JP 2022-066952 A, a display position of an object located around a host vehicle is determined based on the positions of rear-end points on opposite sides of the object. However, when only a rear-end point on one side out of the rear-end points on opposite sides of the object can be recognized, the reliability of the data is lower than when the rear-end points on opposite sides can be recognized, and the actual position and the display position of the object may easily deviate from each other. That is, when only a rear-end point on one side can be recognized, for example, since the object may be displayed with the recognized rear-end point on one side serving as a center, the actual position and the display position of the object may deviate from each other.

An object of the present disclosure is to provide a display control device that can suppress a deviation between an actual position and a display position of an object located around a host vehicle even when only a rear-end point on one side out of rear-end points on opposite sides of the object can be recognized.

A display control device according to a first aspect includes: an acquisition unit configured to acquire a surrounding situation of a host vehicle; and a display control unit configured to display, when an image indicating the surrounding situation of the host vehicle is displayed on a display unit provided near a driver's seat of the host vehicle and only one of rear-end points on opposite sides of an object located around the host vehicle is recognized, an image indicating the object based on an offset amount of the image indicating the object in a lane-width direction, the offset amount being determined depending on a category of the object.

With the display control device according to the first aspect, a deviation between the actual position and the display position of the object located around the host vehicle can be suppressed even when only the rear-end point on one side out of the rear-end points on opposite sides of the object can be recognized.

A display control device according to a second aspect is the display control device according to the first aspect, in which the offset amount is set to half of a width of the image indicating the object in the lane-width direction, the width being determined depending on the category of the object.

With the display control device according to the second aspect, a deviation between the actual position and the display position of the object can be suppressed without causing a sense of incongruity.

A display control device according to a third aspect is the display control device according to the first aspect or the second aspect, further including a determination unit configured to determine whether a position of the image indicating the object after being offset is appropriate based on a recognized position of the one of the rear-end points of the object and a recognized position of a rear center of the object.

With the display control device according to the third aspect, it is possible to check whether the position of the image indicating the object after being offset is appropriate.

A display control device according to a fourth aspect is the display control device according to the third aspect, in which the display control unit is configured to fix a display position of the image indicating the object at a center of an image indicating a lane in which the object is traveling, when determination is made that the position of the image indicating the object after being offset is not appropriate.

With the display control device according to the fourth aspect, even when the position of the image indicating the object after being offset is not appropriate, a deviation between the actual position and the display position of the object can be suppressed.

As described above, according to the present disclosure, a deviation between an actual position and a display position of an object located around a host vehicle can be suppressed even when only a rear-end point on one side out of rear-end points on opposite sides of the object can be recognized.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a hardware configuration of a vehicle;
FIG. 2A is a diagram for describing a positional relationship between the vehicle and a preceding vehicle that is an example of an object;
FIG. 2B is a diagram showing a display image representing the positional relationship between the vehicle and the preceding vehicle shown in FIG. 2A;
FIG. 3A is a diagram showing a traveling state of the vehicle and the preceding vehicle in which only a second rear-end point of the preceding vehicle on a side that is closer to the vehicle is recognized;
FIG. 3B is a diagram showing a traveling state of the vehicle and the preceding vehicle in which only a second rear-end point of the preceding vehicle on a side that is farther from the vehicle is recognized;
FIG. 4A is a diagram showing an example of a traveling state of the vehicle and the preceding vehicle according to the present embodiment;
FIG. 4B is a diagram showing an example of a display position of a preceding vehicle image depending on whether an offset is applied;
FIG. 5A is a diagram for describing a method of checking appropriateness of an offset position;
FIG. 5B is a diagram for describing a method of checking appropriateness of an offset position; and
FIG. 6 is a flowchart showing an example of a flow of display control processing executed by a meter ECU.

### DETAILED DESCRIPTION OF EMBODIMENTS

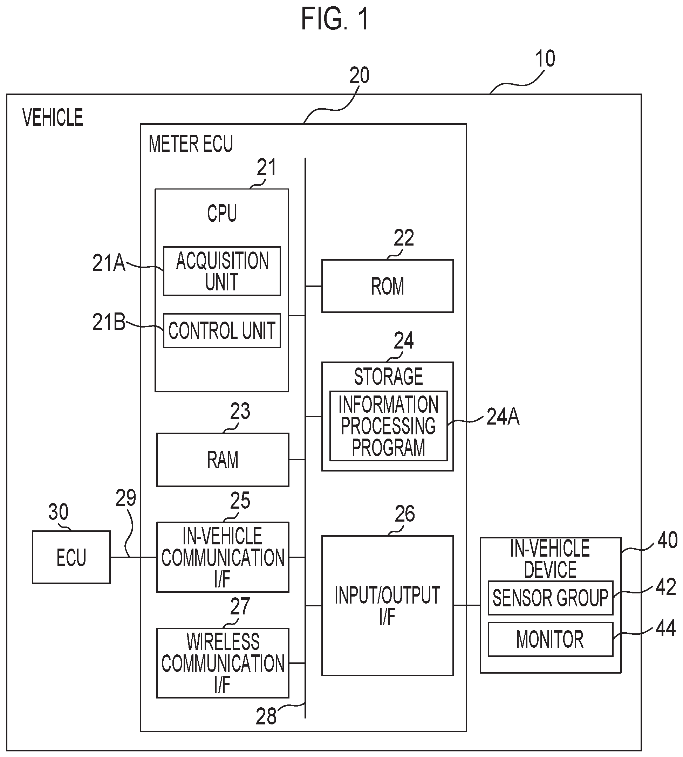

FIG. 1 is a block diagram showing a hardware configuration of a vehicle 10. As shown in FIG. 1, the vehicle 10 includes a meter electronic control unit (ECU) 20. The vehicle 10 is an example of a "vehicle" in the present disclosure, and the meter ECU 20 is an example of a "display control device" in the present disclosure.

The meter ECU 20 includes a central processing unit (CPU) 21, a read only memory (ROM) 22, a random access memory (RAM) 23, a storage 24, an in-vehicle communication interface (I/F) 25, an input/output I/F 26, and a wireless communication I/F 27. The components are connected to each other so as to be able to communicate with each other via an internal bus 28.

The CPU 21 is a central processing unit, and executes various programs or controls each unit. That is, the CPU 21 reads a program from the ROM 22 or the storage 24, and executes the program using the RAM 23 as a work area. The CPU 21 performs control of each of the components and various arithmetic processing according to the program recorded in the ROM 22 or the storage 24.

The ROM 22 stores various programs and various data. The RAM 23 temporarily stores a program or data, as a work area.

The storage 24 is configured by a storage medium such as an embedded multi media card (eMMC) or universal flash storage (UFS), and stores various programs and various data. The storage 24 stores an information processing program 24A. The information processing program 24A is a program for causing the CPU 21 to execute display control processing according to the present embodiment.

The in-vehicle communication I/F 25 is an interface for connecting to another ECU 30, and a communication standard based on a controller area network (CAN) protocol is used. The in-vehicle communication I/F 25 is connected to an external bus 29. Although not shown, the ECU is not limited to the ECU 30 and a plurality of ECUs is provided according to various functions in the vehicle 10.

The input/output I/F 26 is an interface for communicating with an in-vehicle device 40 mounted in the vehicle 10.

The in-vehicle device 40 includes various devices mounted in the vehicle 10. The vehicle 10 includes a sensor group 42 and a monitor 44 as examples of the in-vehicle device 40.

The sensor group 42 includes various sensors and an image capturing unit for detecting a state of the vehicle 10 and a surrounding situation of the vehicle 10. Specifically, the sensor group 42 includes, for example, various sensors such as a 3D-LiDAR sensor, a millimeter wave sensor, an infrared sensor, a blinker sensor, an accelerator position sensor, a vehicle speed sensor, a steering angle sensor, an angular velocity sensor, a global positioning system (GPS) sensor, an illuminance sensor, a gyro sensor, a steering wheel angle sensor, and an acceleration sensor, and a plurality of cameras that captures images of the surroundings of the vehicle 10. The sensor group 42 outputs detection results from the sensors and images captured by the cameras to a predetermined electronic control unit such as the meter ECU 20 and the ECU 30.

The monitor 44 is a meter display that is provided on a meter panel disposed in front of a driver's seat of the vehicle 10 and is for displaying suggestions for operation of functions of the vehicle 10, images related to explanations of the functions, and the like. The monitor 44 is an example of a "display unit" in the present disclosure.

The wireless communication I/F 27 is a wireless communication module for communicating with an external device. For example, communication standards such as 5G, LTE, Wi-Fi (registered trademark), and Bluetooth (registered trademark) are used in the wireless communication module.

In addition, the CPU 21 of the meter ECU 20 includes an acquisition unit 21A and a control unit 21B as functional components. Each functional component is realized by the CPU 21 reading and executing the information processing program 24A stored in the storage 24.

The acquisition unit 21A acquires various types of information that can be acquired in the vehicle 10. Specifically, the acquisition unit 21A acquires detection information such as detection results from various sensors constituting the sensor group 42 and images captured by the cameras as various types of information. The acquisition unit 21A acquires surrounding information representing the surrounding situation of the vehicle 10.

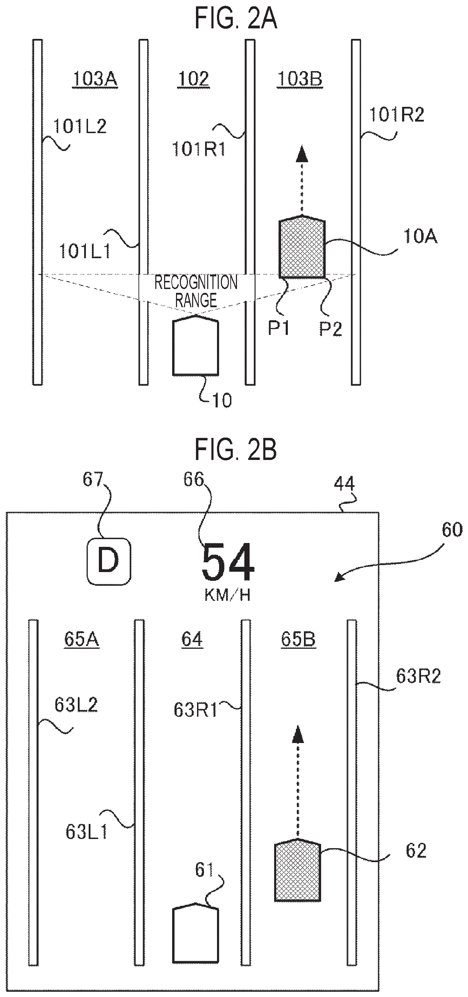

The control unit 21B performs display control related to the display of the monitor 44. For example, as the display control, the control unit 21B causes a surrounding situation display indicating the surrounding situation of the vehicle 10 when viewed from a virtual viewpoint, and a vehicle image indicating the vehicle 10 (see FIG. 2B, or the like) to be displayed on the monitor 44, based on the detection information acquired by the acquisition unit 21A. Here, the "virtual viewpoint" is a viewpoint set in a three-dimensional virtual space in which the position of the vehicle image is set as an origin, and the virtual viewpoint is defined by predetermined viewpoint coordinates and a viewpoint angle (orientation) in the virtual space. As an example, the virtual viewpoint is a viewpoint that overlooks the vehicle 10 and the surroundings thereof at a specific viewpoint angle from a specific viewpoint coordinate located above the vehicle image in the virtual space. The control unit 21B is an example of a "display control unit" and a "determination unit" in the present disclosure.

FIG. 2A is a diagram for describing a positional relationship between the vehicle 10 and a preceding vehicle 10A that is an example of an object. In FIG. 2A, the vehicle 10 is traveling in a lane 102 that is defined by a first lane line 101L1 and a second lane line 101R1 on both sides of the vehicle 10. The first lane line 101L1 is a lane line on a left side of the vehicle 10, and the second lane line 101R1 is a lane line on a right side of the vehicle 10. An adjacent lane 103A is disposed on a left side of the lane 102, and an adjacent lane 103B is disposed on a right side. The adjacent lane 103A is defined by the first lane line 101L1 and a third lane line 101L2, and the adjacent lane 103B is defined by the second lane line 101R1 and a fourth lane line 101R2. When the first lane line 101L1, the second lane line 101R1, the third lane line 101L2, and the fourth lane line 101R2 are not to be distinguished and described in particular, the lane lines described above are simply referred to as lane line 101. The preceding vehicle 10A is traveling ahead of the vehicle 10 in the adjacent lane 103B. The preceding vehicle 10A includes a first rear-end point P1 that is an end point of the preceding vehicle 10A on a side that is closer to the vehicle 10 and a second rear-end point P2 different from the first rear-end point P1. The first rear-end point P1 represents a left rear end of the preceding vehicle 10A, and the second rear-end point P2 represents a right rear end of the preceding vehicle 10A. The control unit 21B determines a position at which an image indicating the preceding vehicle 10A is displayed on the monitor 44, based on the positions of the first rear-end point P1 and the second rear-end point P2 of the preceding vehicle 10A recognized by the sensor group 42. FIG. 2B is a diagram showing a display image 60 representing the positional relationship between the vehicle 10 and the preceding vehicle 10A shown in FIG. 2A. For convenience of description, the display image 60 including the vehicle image 61 is shown two-dimensionally. As shown in FIG. 2B, the control unit 21B displays the display image 60 representing the positional relationship of the vehicle 10 shown in FIG. 2A in a predetermined display area of the monitor 44. The predetermined display area is a part of the monitor 44 and is set such that a driver seated in the driver's seat can visually recognize the display area through the opening of a steering wheel. The display image 60 includes a vehicle image 61 showing the vehicle 10, a preceding vehicle image 62 showing the preceding vehicle 10A, a first lane line image 63L1 showing the first lane line 101L1, a second lane line image 63R1 showing the second lane line 101R1, a third lane line image 63L2 showing the third lane line 101L2, a fourth lane line image 63R2 showing the fourth lane line 101R2, a lane image 64 showing the lane 102, and adjacent lane images 65A, 65B showing the adjacent lanes 103A, 103B. The first lane line image 63L1 is a lane line image on a left side of the vehicle image 61, and the second lane line image 63R1 is a lane line image on a right side of the vehicle image 61. When the first lane line image 63L1, the second lane line image 63R1, the third lane line image 63L2, and the fourth lane line image 63R2 are not to be distinguished and described in particular, the lane line images described above are simply referred to as lane line image 63. In addition, an image 66 showing a traveling speed of the vehicle 10 and an image 67 showing a shift position of the vehicle 10 are displayed above the lane image 64.

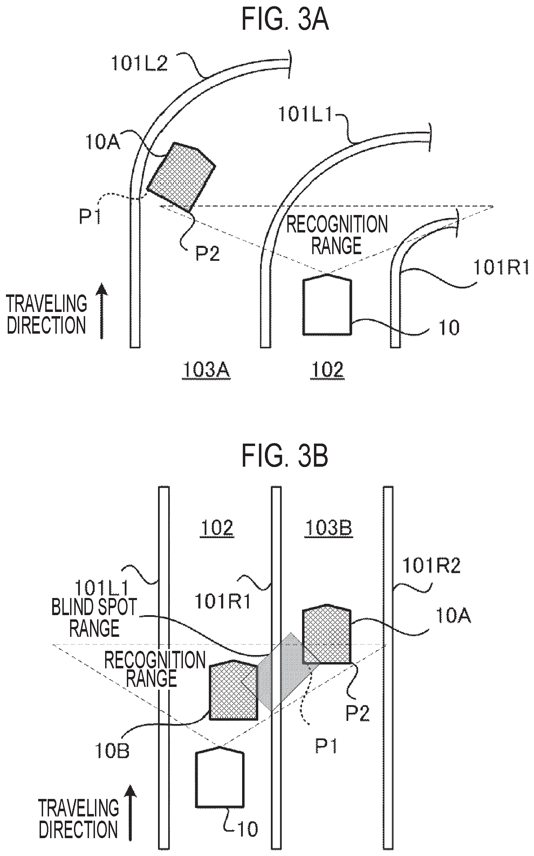

As described above, the display position of the preceding vehicle 10A is determined based on the positions of the rear-end points on opposite sides of the preceding vehicle 10A. However, as shown in FIGS. 3A and 3B, when only a rear-end point on one side out of the rear-end points on opposite sides of the preceding vehicle 10A can be recognized, the reliability of the data is lower than when the rear-end points on opposite sides can be recognized, and the actual position and the display position of the preceding vehicle 10A may easily deviate from each other. That is, when only a rear-end point on one side can be recognized, for example, since the object may be displayed with the recognized rear-end point on one side serving as a center, the actual position and the display position of the object may deviate from each other. FIG. 3A is a diagram showing a traveling state of the vehicle 10 and the preceding vehicle 10A in which only a second rear-end point P2 of the preceding vehicle 10A on a side that is closer to the vehicle 10 is recognized. FIG. 3B is a diagram showing a traveling state of the vehicle 10 and the preceding vehicle 10A in which only a second rear-end point P2 of the preceding vehicle 10A on a side that is farther from the vehicle 10 is recognized. In FIG. 3B, a case is shown in which the first rear-end point P1 of the preceding vehicle 10A cannot be recognized due to a blind spot caused by another preceding vehicle 10B traveling in the lane 102.

Therefore, when the display image 60 that is an image indicating the surrounding situation of the vehicle 10 is displayed on the monitor 44 provided near the driver's seat of the vehicle 10 and only one of the first rear-end point P1 and the second rear-end point P2 on opposite sides of the preceding vehicle 10A located around the vehicle 10 is recognized, the control unit 21B according to the present embodiment displays the preceding vehicle image 62 based on an offset amount of the preceding vehicle image 62 in a lane-width direction, the offset amount being determined depending on a category of the preceding vehicle 10A. The position of the preceding vehicle image 62 in the lane-width direction is a position in a direction intersecting (for example, orthogonal to) the traveling direction (indicated by an arrow) of the preceding vehicle 10A, that is, a position in a left-right direction (lane-width direction) as viewed from the preceding vehicle 10A. The category of the preceding vehicle 10A is recognized by, for example, an object detection model (not shown). The category of the preceding vehicle 10A is recognized as, for example, a standard vehicle, a compact vehicle, a bus, a truck, or a two-wheeled vehicle (motorcycle). The category of the preceding vehicle 10A is associated in advance with a total length and a total width of the preceding vehicle 10A, and a center position of the preceding vehicle 10A is identified from the total length and the total width of the preceding vehicle 10A. The offset amount is an offset amount with respect to the second rear-end point P2 of the preceding vehicle image 62, and is reflected in the preceding vehicle image 62 when the preceding vehicle image 62 corresponding to the preceding vehicle 10A is displayed. Accordingly, even when only one of the rear-end points of the preceding vehicle 10A located around the vehicle 10 can be recognized, a deviation between the actual position and the display position of the preceding vehicle 10A can be suppressed.

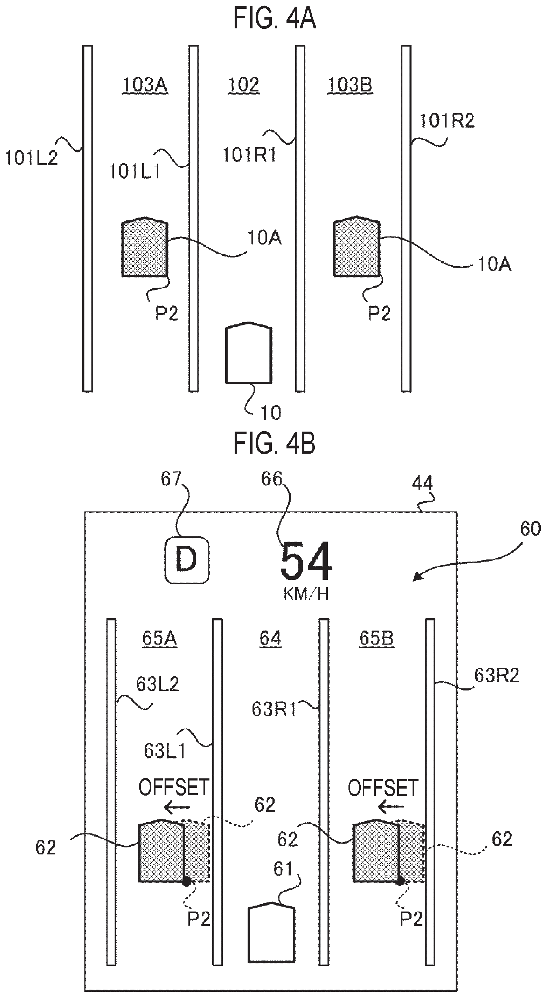

FIG. 4A is a diagram showing an example of a traveling state of the vehicle 10 and the preceding vehicle 10A according to the present embodiment. In FIG. 4A, the vehicle 10 is traveling in the lane 102, and the preceding vehicle 10A is traveling in the adjacent lane 103A or the adjacent lane 103B. FIG. 4B is a diagram showing an example of a display position of the preceding vehicle image 62 depending on whether an offset is applied. In FIG. 4B, the preceding vehicle image 62 drawn with a solid line indicates the display position when an offset is applied, and the preceding vehicle image 62 drawn with a dotted line indicates the display position when no offset is applied. When only the second rear-end point P2 on one side of the preceding vehicle 10A can be recognized, as indicated by the dotted line in FIG. 4B, since the preceding vehicle image 62 is displayed with the recognized second rear-end point P2 on one side as a center, the actual position and the display position of the preceding vehicle 10A deviate from each other. Therefore, when only the second rear-end point P2 of the preceding vehicle 10A traveling in the adjacent lane 103A on the left side as viewed from the vehicle 10 (the rear-end point of the preceding vehicle 10A on a side that is closer to the vehicle 10) is recognized, the control unit 21B determines the offset amount of the preceding vehicle image 62 in the lane-width direction depending on the category of the preceding vehicle 10A. Similarly, when only the second rear-end point P2 of the preceding vehicle 10A traveling in the adjacent lane 103B on the right side as viewed from the vehicle 10 (the rear-end point of the preceding vehicle 10A on a side that is farther from the vehicle 10) is recognized, the control unit 21B may determine the offset amount of the preceding vehicle image 62 in the lane-width direction depending on the category of the preceding vehicle 10A. The offset amount is preferably set to, for example, half of a width of the preceding vehicle image 62 in the lane-width direction that is determined depending on the category of the preceding vehicle 10A. Accordingly, a deviation between the actual position and the display position of the preceding vehicle 10A can be suppressed without causing a sense of incongruity. The control unit 21B offsets the display position of the preceding vehicle image 62 corresponding to the preceding vehicle 10A shown in FIG. 4A based on the determined offset amount, and displays the preceding vehicle image 62 on the monitor 44.

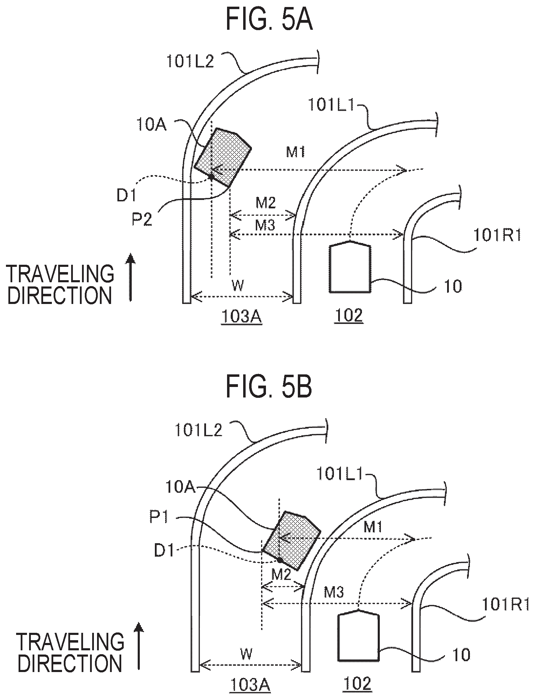

FIGS. 5A and 5B are diagrams for describing a method of checking appropriateness of an offset position. In FIGS. 5A and 5B, the preceding vehicle 10A indicates the actual position and is traveling in the adjacent lane 103A. As shown in FIG. 5A, the control unit 21B determines whether the display position of the preceding vehicle image 62 after being offset is appropriate based on a recognized position of the second rear-end point P2 of the preceding vehicle 10A on a side that is closer to the vehicle 10 and a recognized position of a rear center D1 of the preceding vehicle 10A. Specifically, when the position of the rear center D1 of the preceding vehicle 10A is set to M1, the actual position of the second rear-end point P2 of the preceding vehicle 10A with the first lane line 101L1 as a reference is set to M2, the actual position of the second rear-end point P2 of the preceding vehicle 10A with the second lane line 101R1 as a reference is set to M3, and a lane width is set to W, it is determined whether any of the following conditions is satisfied: condition (1) or condition (2). However, since the yaw angle of the preceding vehicle 10A is very small, the influence of the yaw angle is ignored. The position M1 is a distance from the center of the lane 102 to the rear center D1 of the preceding vehicle 10A and is a distance in the lane-width direction when a curved shape is converted into a linear shape. The position M2 is a distance from the first lane line 101L1 to the actual position of the second rear-end point P2 of the preceding vehicle 10A, and the position M3 is a distance from the second lane line 101R1 to the actual position of the second rear-end point P2 of the preceding vehicle 10A. The lane width W is, for example, 3.6 m, which is a typical lane width.

On the other hand, as shown in FIG. 5B, the control unit 21B determines whether the display position of the preceding vehicle image 62 after being offset is appropriate based on a recognized position of the first rear-end point P1 of the preceding vehicle 10A on a side that is farther from the vehicle 10 and the recognized position of the rear center D1 of the preceding vehicle 10A. Specifically, when the position of the rear center D1 of the preceding vehicle 10A is set to M1, the actual position of the first rear-end point P1 of the preceding vehicle 10A with the first lane line 101L1 as a reference is set to M2, the actual position of the first rear-end point P1 of the preceding vehicle 10A with the second lane line 101R1 as a reference is set to M3, and a lane width is set to W, it is determined whether any of the following conditions is satisfied: condition (1) or condition (2).$M 1 > M 2 + W / 2$ (1) $M 1 > M 3 - W / 2$ (2)

Accordingly, it is possible to check whether the display position of the preceding vehicle image 62 after being offset is appropriate. Here, when it is determined that the display position of the preceding vehicle image 62 after being offset is not appropriate, that is, when neither the condition (1) nor the condition (2) is satisfied, the control unit 21B may fix the display position of the preceding vehicle image 62 at the center of the adjacent lane image 65A corresponding to the adjacent lane 103A and cause the preceding vehicle image 62 to be displayed. Accordingly, even when the display position of the preceding vehicle image 62 after being offset is not appropriate, a deviation between the actual position and the display position of the preceding vehicle 10A can be suppressed. Specifically, when the condition (1) is applied, for example, given that M1 = 3.9 m, M2 = 1.7 m, and W/2 = 1.8 m, 3.9 m > 1.7 m + 1.8 m is obtained and the display position is determined to be appropriate, and given that M1 = 2.7 m, M2 = 1.7 m, and W/2 = 1.8 m, 2.7 m < 1.7 m + 1.8 m is obtained and the display position is determined not to be appropriate. On the other hand, when the condition (2) is applied, for example, given that M1 = 3.9 m, M3 = 5.3 m, and W/2 = 1.8 m, 3.9 m > 5.3 m - 1.8 m is obtained and the display position is determined to be appropriate, and given that M1 = 2.7 m, M3 = 5.3 m, and W/2 = 1.8 m, 2.7 m < 5.3 m - 1.8 m is obtained and the display position is determined not to be appropriate.

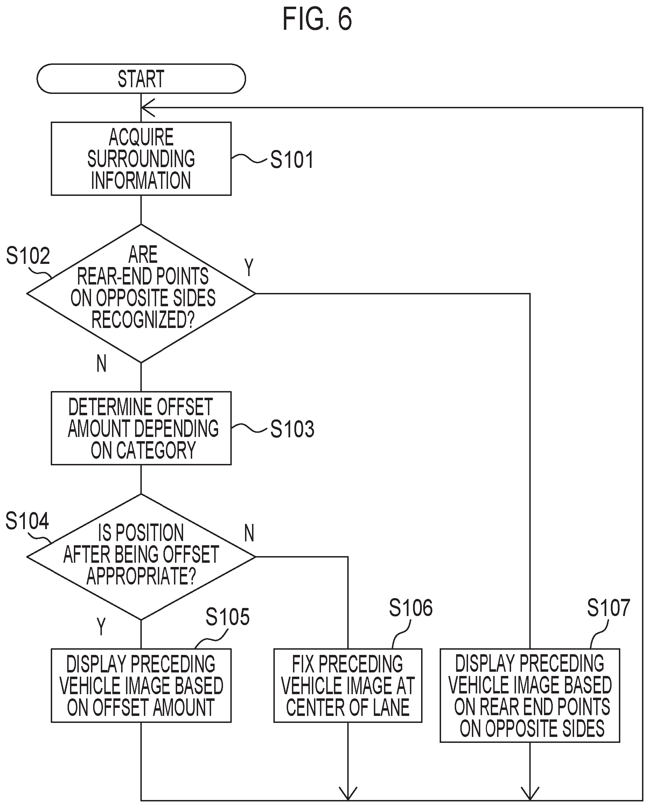

FIG. 6 is a flowchart showing an example of a flow of display control processing executed by the meter ECU 20. The CPU 21 reads the information processing program 24A from the storage 24, loads the information processing program 24A into the RAM 23, and executes the information processing program 24A to perform the display control processing. As an example, the display control processing is automatically executed repeatedly at predetermined time intervals.

In step S101 of FIG. 6, the CPU 21 acquires surrounding information indicating the surrounding situation of the vehicle 10. Specifically, as described above, the vehicle 10 is provided with the sensor group 42 that can detect the surrounding situation, and the information detected by the sensor group 42 is acquired as the surrounding information.

In step S102, the CPU 21 determines whether the first rear-end point P1 and the second rear-end point P2 on opposite sides of the preceding vehicle 10A can be recognized based on the surrounding information acquired in step S101. When it is determined that the first rear-end point P1 and the second rear-end point P2 on opposite sides cannot be recognized, that is, when it is determined that only the first rear-end point P1 or the second rear-end point P2 on one side can be recognized (negative determination), the process proceeds to step S103, and when it is determined that the first rear-end point P1 and the second rear-end point P2 on opposite sides can be recognized (positive determination), the process proceeds to step S107.

In step S103, the CPU 21 determines, as an example and as shown in FIGS. 4A and 4B, an offset amount of the preceding vehicle image 62 depending on a category of the preceding vehicle 10A, with respect to the first rear-end point P1 or the second rear-end point P2 on one side recognized in step S102. The offset amount is preferably set to, for example, half of a width of the preceding vehicle image 62 in the lane-width direction, the width being determined depending on the category of the preceding vehicle 10A.

In step S104, the CPU 21, as an example, determines whether the display position of the preceding vehicle image 62 after being offset in accordance with the offset amount determined in step S103 is appropriate, as shown in FIGS. 5A and 5B. When it is determined that the display position of the preceding vehicle image 62 after being offset is appropriate (positive determination), the process proceeds to step S105, and when it is determined that the display position of the preceding vehicle image 62 after being offset is not appropriate (negative determination), the process proceeds to step S106.

In step S105, the CPU 21, as an example, causes the preceding vehicle image 62 to be displayed on the monitor 44 based on the offset amount determined in step S103, as shown in FIG. 4B, and then returns to step S101 to repeat the processing.

On the other hand, in step S106, the CPU 21 fixes the preceding vehicle image 62 at the center of the lane and causes the preceding vehicle image 62 to be displayed on the monitor 44, and then returns to step S101 to repeat the processing.

On the other hand, in step S107, the CPU 21 causes the preceding vehicle image 62 to be displayed on the monitor 44 based on the first rear-end point P1 and the second rear-end point P2 on opposite sides, and then returns to step S101 to repeat the processing.

As described above, according to the present embodiment, a deviation between the actual position and the display position of an object located around the host vehicle can be suppressed even when only a rear-end point on one side out of rear-end points on opposite sides of the object can be recognized.

Note that various processing executed by the CPU 21 by reading and executing software (program) in the embodiment described above may be executed by various processors other than the CPU. Examples of the processor in this case include a programmable logic device (PLD) of which a circuit configuration can be changed after manufacture, such as a field-programmable gate array (FPGA), and a dedicated electric circuit that is a processor having a circuit configuration specially designed to execute specific processing, such as an application specific integrated circuit (ASIC). In addition, the various processing may be executed by one of the various processors, or may be executed by a combination of two or more processors of the same type or different types (for example, a combination of a plurality of FPGAs, and a combination of a CPU and an FPGA). Also, more specifically, the hardware structure of the various processors is an electric circuit in which circuit elements, such as semiconductor elements, are combined.

In addition, in the embodiment described above, a case has been described in which the information processing program 24A is stored (installed) in advance in the storage 24, but the present disclosure is not limited thereto. The information processing program 24A may also be provided in a form recorded on a recording medium, such as a compact disk read only memory (CD-ROM), a digital versatile disk read only memory (DVD-ROM), and a universal serial bus (USB) memory. In addition, the information processing program 24A may also be downloaded from an external device via a network. The technology of the present disclosure can also be applied to programs and program products.

## Claims

1. A display control device comprising:
an acquisition unit (21A) configured to acquire a surrounding situation of a host vehicle (10); and
a display control unit (21B) configured to display, when an image (60) indicating the surrounding situation of the host vehicle is displayed on a display unit (44) provided near a driver's seat of the host vehicle (10) and only one of rear-end points (P2) on opposite sides of an object (10A) located around the host vehicle is recognized, an image indicating the object (62) based on an offset amount of the image indicating the object in a lane-width direction, the offset amount being determined depending on a category of the object (10A).

2. The display control device according to claim 1, wherein the offset amount is set to half of a width of the image (62) indicating the object (10A) in the lane-width direction, the width being determined depending on the category of the object (10A).

3. The display control device according to claim 1 or 2, further comprising a determination unit configured to determine whether a position of the image (62) indicating the object after being offset is appropriate based on a recognized position of the one of the rear-end points (P2) of the object (10A) and a recognized position of a rear center (D1) of the object (10A).

4. The display control device according to claim 3, wherein the display control unit (21B) is configured to fix a display position of the image (62) indicating the object (10A) at a center of an image indicating a lane in which the object is traveling, when determination is made that the position of the image indicating the object after being offset is not appropriate.
